# EUROPEAN PATENT SPECIFICATION

(11) **EP 4 004 078 B1**
(45) Date of publication and mention of the grant of the patent: **25.02.2026**
(21) Application number: 20753626.9
(22) Date of filing: 22.07.2020
(51) Int. Cl.: C08G 18/18, C08G 18/32, C08G 18/48, C08G 18/66, C08G 18/76

(54) **FORMULATED POLYOL COMPOSITIONS**
FORMULIERTE POLYOLZUSAMMENSETZUNGEN
COMPOSITIONS DE POLYOL FORMULÉES

(30) Priority: 24.07.2019 US 201962877897 P
(43) Date of publication of application: 01.06.2022
(73) Proprietor: Dow Global Technologies LLC, Midland, MI 48674 (US)
(72) Inventor: NEGRETTI, Alberto Fabian, Puerto Gral San Martín, S2202DTH (AR)
(74) Representative: Jewell, Catherine Mary
(86) International application number: PCT/US2020/042970
(87) International publication number: WO 2021/016295

(56) References cited:
- US-A- 5 310 766
- US-A1- 2017 002 165

## Description

### Field of Disclosure

Embodiments of the present disclosure are directed towards formulated polyol compositions, more specifically, embodiments are directed towards formulated polyol compositions that include a sucrose propoxylated polyol, a propoxylated homopolymer triol, and an amine-initiated polyether alcohol.

### Background

Foams are dispersions in which a gas is dispersed in a liquid material, a solid material, or a gel material. Foams can be formed by a chemical reaction of polyols and isocyanate. Foams can be utilized for a number of various applications, including insulation, bedding, furniture, vehicle seating, and carpet backing, among others. US 5,310,766 relates to a polyurethane foam stabilizing additive of especial value in sealant applications, that comprises from about 10 to about 50 weight percent of a hydrocarbon oil, and in from about 90 to about 50 weight percent a polyester polyol which is a solid at room temperature.

### Summary

The present disclosure provides formulated polyol compositions including: a sucrose propoxylated polyol having an average hydroxyl functionality from 3.0 to 6.0, an average hydroxyl number from 360 to 460 mg KOH/g, and a number average molecular weight from 400 to 800 g/mol; a propoxylated homopolymer triol having an average hydroxyl functionality from 2.6 to 3.4, an average hydroxyl number from 300 to 500 mg KOH/g, and a number average molecular weight from 250 to 650 g/mol; an amine-initiated polyether alcohol having an average hydroxyl functionality from 1.0 to 3.5, an average hydroxyl number from 550 to 750 mg KOH/g, and a number average molecular weight from 125 to 250 g/mol; a blowing agent; a surfactant; and a catalyst selected from a blowing catalyst, a gel catalyst, and combinations thereof, wherein the sucrose propoxylated polyol is from 60 to 85 parts of the formulated polyol composition based upon 100 parts of the formulated polyol composition; wherein the propoxylated homopolymer triol is from 9 to 18 parts of the formulated polyol composition based upon 100 parts of the formulated polyol composition; and wherein the amine-initiated polyether alcohol is from 3 to 12 parts of the formulated polyol composition based upon 100 parts of the formulated polyol composition.

The present disclosure provides foam formulations including the formulated polyol composition and an isocyanate.

The present disclosure provides foam products formed by curing the foam formulations.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Formulated polyol compositions including a sucrose propoxylated polyol, a polyether triol, and an amine-initiated polyether alcohol are disclosed herein. Advantageously, the formulated polyol compositions disclosed herein can be utilized to make foam formulations and foam products having a combination of properties that are desirable for a number of applications. For instance, the formulated polyol compositions disclosed herein can be utilized to make foam formulations that can be cured to make wood substitute materials, which may be referred to as polyurethane wood materials.

The foam formulations, as disclosed herein, that can be cured to foam products have desirable reactivity properties, i.e., desirable cream time and gel time. The foam products have desirable properties, i.e. desirable molded density, Shore D hardness, and skin aspect.

The formulated polyol compositions disclosed herein include a sucrose propoxylated polyol. As used herein, "sucrose propoxylated polyol" refers to a compound formed via a reaction of sucrose and propylene oxide. One or more embodiments provide that the sucrose propoxylated polyol does not include structural units derived from ethylene oxide or butylene oxide.

The sucrose propoxylated polyol has an average hydroxyl functionality from 3.0 to 6.0. All individual values and subranges from 3.0 to 6.0 are included; for example, the sucrose propoxylated polyol can have an average hydroxyl functionality from a lower limit of 3.0, 3.2, 3.5, or 4.0 to an upper limit of 6.0, 5.7, 5.5, or 5.0.

The sucrose propoxylated polyol has an average hydroxyl number from 360 to 460 mg KOH/g. All individual values and subranges from 360 to 460 mg KOH/g are included; for example, the sucrose propoxylated polyol can have an average hydroxyl number from a lower limit of 360, 370, or 380 mg KOH/g to an upper limit of 460, 440, or 420 mg KOH/g. Average hydroxyl number, as KOH, can be determined according to ASTM D4274.

The sucrose propoxylated polyol has a number average molecular weight from 400 to 800 g/mol. All individual values and subranges from 400 to 800 g/mol are included; for example, the sucrose propoxylated polyol can have a number average molecular weight from a lower limit of 400, 450, or 500 g/mol to an upper limit of 800, 750, or 700 g/mol.

The sucrose propoxylated polyol can have an equivalent weight from 91.7 to 183.5 g/eq. Equivalent weight can be determined as a quotient of molecular weight and functionality. All individual values and subranges from 91.7 to 183.5 g/eq are included; for example, the sucrose propoxylated polyol can have an equivalent weight from a lower limit of 91.7, 103.2, or 114.7 g/eq to an upper limit of 183.5, 172.0, or 160.0.6 g/eq.

The sucrose propoxylated polyol can be prepared using known equipment, reaction conditions, and reaction components. For instance, the sucrose propoxylated polyol can be formed from reaction mixtures including sucrose, propylene oxide, glycerin, and monopropylene glycol, among other reaction components.

The sucrose propoxylated polyol may be obtained commercially. Examples of commercially available sucrose propoxylated polyol include, but are not limited to, polyols sold under the trade name VORANOL^{™}, such as VORANOL^{™} 466, available from The Dow Chemical Company, among others.

The sucrose propoxylated polyol is from 60 to 85 parts of the formulated polyol composition based upon 100 parts of the formulated polyol composition. All individual values and subranges from 60 to 85 parts are included; for example, the sucrose propoxylated polyol can be from a lower limit of 60, 65, or 70 to an upper limit of 85, 80, 76, or 74 parts of the formulated polyol composition based upon 100 parts of the formulated polyol composition.

The formulated polyol compositions disclosed herein include a propoxylated homopolymer triol. As used herein, "triol" refers to a compound having an average hydroxyl functionality from 2.6 to 3.4. As used herein, "propoxylated homopolymer triol" refers to a polyether polyol that is produced by polymerization of propylene oxide and an initiator. The initiator may be a glycerol, a glycerine, or combination thereof. Various mixing ratios for the polymerization may be utilized for different applications. Embodiments of the present disclosure provide that a terminal group of the polyether polyol, i.e. the propoxylated homopolymer triol, is a secondary hydroxyl group.

The propoxylated homopolymer triol has an average hydroxyl functionality from 2.6 to 3.4. All individual values and subranges from 2.6 to 3.4 are included; for example, the propoxylated homopolymer triol can have an average hydroxyl functionality from a lower limit of 2.6, 2.7, or 2.8 to an upper limit of 3.4, 3.3, or 3.2.

The propoxylated homopolymer triol has an average hydroxyl number from 300 to 500 mg KOH/g. All individual values and subranges from 300 to 500 mg KOH/g are included; for example, the propoxylated homopolymer triol can have an average hydroxyl number from a lower limit of 300, 315, or 325 mg KOH/g to an upper limit of 500, 475, or 450 mg KOH/g.

The propoxylated homopolymer triol has a number average molecular weight from 250 to 650 g/mol. All individual values and subranges from 250 to 650 g/mol are included; for example, the propoxylated homopolymer triol can have a number average molecular weight from a lower limit of 250, 300, or 350 g/mol to an upper limit of 650, 600, or 550 g/mol.

The propoxylated homopolymer triol can have an equivalent weight from 83.3 to 216.7 g/eq. All individual values and subranges from 83.3 to 216.7 g/eq are included; for example, the propoxylated homopolymer triol can have an equivalent weight from a lower limit of 83.3, 100.0, or 116.7 g/eq to an upper limit of 216.7, 200, or 183.3 g/eq.

The propoxylated homopolymer triol can be prepared using known equipment, reaction conditions, and reaction components.

The propoxylated homopolymer triol may be obtained commercially. Examples of commercially available propoxylated homopolymer triols include, but are not limited to, propoxylated homopolymer triols sold under the trade name VORANOL^{™}, such as VORANOL^{™} 450N, available from the Dow Chemical Company, among others.

The propoxylated homopolymer triol is from 9 to 18 parts of the formulated polyol composition based upon 100 parts of the formulated polyol composition. All individual values and subranges from 9 to 18 parts are included; for example, the propoxylated homopolymer triol can be from a lower limit of 9, 9.5, or 10 to an upper limit of 18, 13, 12.5, or 12 parts of the formulated polyol composition based upon 100 parts of the formulated polyol composition.

The formulated polyol compositions disclosed herein include an amine-initiated polyether alcohol. The amine-initiated polyether alcohol may be initiated from aromatic amine or aliphatic amine, for example, the amine-initiated polyether alcohol may be an ortho toluenediamine (o-TDA) initiated alcohol, an ethylenediamine initiated alcohol, a diethylenetriamine, triisopropanolamine initiated alcohol, or a combination thereof, among others.

The amine-initiated polyether alcohol has an average hydroxyl functionality from 1.0 to 3.5. All individual values and subranges from 1.0 to 3.5 are included; for example, the amine-initiated polyether alcohol can have an average functionality from a lower limit of 1.0, 1.4, or 1.8 to an upper limit of 3.5, 3.0, or 2.5.

The amine-initiated polyether alcohol has an average hydroxyl number from 550 to 750 mg KOH/g. All individual values and subranges from 550 to 750 mg KOH/g are included; for example, the amine-initiated polyether alcohol can have an average hydroxyl number from a lower limit of 550, 575, or 600 mg KOH/g to an upper limit of 750, 725, or 700 mg KOH/g.

The amine-initiated polyether alcohol has a number average molecular weight from 125 to 250 g/mol. All individual values and subranges from 125 to 250 g/mol are included; for example, the amine-initiated polyether alcohol can have a number average molecular weight from a lower limit of 125, 135, or 145 g/mol to an upper limit of 250, 225, or 200 g/mol.

The amine-initiated polyether alcohol can have an equivalent weight from 62.5 to 125 g/mol. All individual values and subranges from 62.5 to 125 g/mol are included; for example, the amine-initiated polyether alcohol can have an equivalent weight from a lower limit of 62.5, 67.5, or 77.5 g/mol to an upper limit of 125, 112.5, or 100 g/mol.

The amine-initiated polyether alcohol can be prepared using known equipment and reaction conditions, e.g., a reaction process including an amine and an alkylene oxide, e.g., propylene oxide, in the presence of a catalyst. The amine-initiated polyether alcohol may be initiated by an aliphatic amine have an amino functionality that is less than 5.0 (e.g., greater than 2.5) and/or an amino equivalent weight that less than 60 g/mol (e.g., from 15 g/mol to 60 g/mol, 20 g/mol to 50 g/mol, etc). Exemplary aliphatic amines that may be used include ethylenediamine, which may be used alone or in combination with other amine initiators. One or more embodiments provide that the amine-initiated polyether alcohol does not include structural units derived from ethylene oxide or butylene oxide. The amine-initiated polyether alcohol may be obtained commercially. Examples of commercially available amine-initiated polyether alcohols include, but are not limited to, alcohols sold under the trade name VORANOL^{™}, such as VORANOL^{™} RA 640, available from The Dow Chemical Company, among others.

The amine-initiated polyether alcohol is from 3 to 12 parts of the formulated polyol composition based upon 100 parts of the formulated polyol composition. All individual values and subranges from 3 to 12 parts are included; for example, the amine-initiated polyether alcohol can be from a lower limit of 3, 3.5, or 4 weight percent to an upper limit of 12, 7, 6.5, or 6 parts of the formulated polyol composition based upon 100 parts of the formulated polyol composition.

The formulated polyol composition according to the invention includes a blowing agent. The blowing agent can be a physical blowing agent, a chemical blowing agent, or combinations thereof.

Examples of physical blowing agents include liquid carbon dioxide; alkanes; cycloalkanes, such as, cyclopentane, cyclohexane, cyclobutane and mixtures thereof; other cycloalkanes having up to 7 carbon atoms; dialkyl ethers, cycloalkylene ethers, fluoroalkanes, hydrofluoroolefins, hydrochlorofluoroolefins, and mixtures thereof. Examples of alkanes include, but are not limited to, propane, butane, n-butane, isobutane, pentane, isopentane and combinations thereof. Examples of dialkyl ethers include dimethyl ether, methyl ethyl ether, methyl butyl ether, diethyl ether, and combinations thereof. An example of a cycloalkylene ether is furan. Examples of fluoroalkanes include, but are not limited to, pentafluoropropane, trifluoromethane, difluoromethane, difluoroethane, tetrafluoroethane, hepta-fluoropropane, pentafluorobutane, heptafluorobutane, and combinations thereof, among others. Examples of hydrofluoroolefins and/or hydrochlorofluoroolefins include, but are not limited to 1,1,1,4,4,5,5,5-octafluoro-2-pentene (HFC-1438mzz), Z-1,1,1,4,4,4-hexafluoro-2-butene (HFC-1336mzz, Z-isomer), trans-1,3,3,3-tetrafluoropropene, 1-chloro-3,3,3-trifluoropropene (HFO-1233zd). One or more embodiments provide that the physical blowing agent is dipropylene glycol methyl ether. Dipropylene glycol methyl ether may be obtained commercially, e.g., as DOWANOL^{™} DPM, available from The Dow Chemical Company.

An example of a chemical blowing agent is water.

The blowing agent can be from 4 to 10 parts of the formulated polyol composition based upon 100 parts of the formulated polyol composition. All individual values and subranges from 4 to 10 parts are included; for example, the blowing agent can be from a lower limit of 4, 5.5, or 5 weight percent to an upper limit of 10, 9.5, or 8 parts of the formulated polyol composition based upon 100 parts of the formulated polyol composition.

The formulated polyol compositions according to the invention include a surfactant. Surfactants for use in the preparation of polyurethane foams are well-known to those skilled in the art, and many are commercially available. The surfactant may be a silicone surfactant, a non-silicone surfactant, or a combination thereof. Examples of suitable silicone surfactants include, but are not limited to, TEGOSTAB B-8427, B-8454, B-8404, B-8407, B-8409, and B-8462 from Evonik; L-5130, L-5180, L-5340, L-5440, L-6100, L-6900, L-6980, and L-6988 from MOMENTIVE, and DC-5374, DC-193, DC-197, DC-5582, and DC-5598 from Dow Corning. Examples of non-silicone surfactants include, but are not limited to, oxyethylated alkylphenols, oxyethylated fatty alcohols, paraffin oils, castor oil esters, ricinoleic acid esters, turkey red oil, groundnut oil, paraffins, silicone surfactants, and fatty alcohols.

The surfactant can be from 0.5 to 5.0 parts of the formulated polyol composition based upon 100 parts of the formulated polyol composition. All individual values and subranges from 0.5 to 5.0 parts are included; for example, the surfactant can be from a lower limit of 0.5, 1.0, or 2.0 to an upper limit of 5.0, 4.5, or 4.0 parts of the formulated polyol composition based upon 100 parts of the formulated polyol composition.

The formulated polyol compositions according to the invention include a catalyst as defined in the claims. The catalyst may be a blowing catalyst, a gel catalyst, a trimerization catalyst, or combinations thereof. As used herein, blowing catalysts and gel catalysts, may be differentiated by a catalytic propensity to promote either the urea (blow) reaction, in the case of the blowing catalyst, or the urethane (gel) reaction, in the case of the gel catalyst. A trimerization catalyst may be utilized to promote reactivity of the compositions. One or more embodiments provide that the catalyst is selected from a blowing catalyst, a gel catalyst, or a combination thereof.

Examples of blowing catalysts, e.g., catalysts that generally promote the blow reaction include, but are not limited to, short chain tertiary amines or tertiary amines containing an oxygen. For instance, blowing catalysts include bis-(2-dimethylaminoethyl)ether; pentamethyldiethylene-triamine, triethylamine, tributyl amine, N,N-dimethylaminopropylamine, N,N-dimethylethanolamine, N,N,N',N'-tetramethylethylenediamine, and combinations thereof, among others. A specific example of a commercial blowing catalyst is NIAX A1 from MOMENTIVE.

Examples of gel catalysts, e.g., catalysts that generally promote the gel reaction, include, but are not limited to, organometallic compounds, cyclic tertiary amines and/or long chain amines, e.g., that contain several nitrogen atoms, and combinations thereof. Organometallic compounds include organotin compounds, such as tin(II) salts of organic carboxylic acids, e.g., tin(II) diacetate, tin(II) dioctanoate, tin(II) diethylhexanoate, and tin(II) dilaurate, and dialkyltin(IV) salts of organic carboxylic acids, e.g., dibutyltin diacetate, dibutyltin dilaurate, dibutyltin maleate and dioctyltin diacetate. Bismuth salts of organic carboxylic acids may also be utilized as the gelling catalyst, such as, for example, bismuth octanoate. Cyclic tertiary amines and/or long chain amines include dimethylbenzylamine, N,N,N',N'-tetramethylbutanediamine, dimethylcyclohexylamine, triethylenediamine, and combinations thereof., and combinations thereof. Specific examples of commercial gel catalysts are DABCO 33-LV and DABCO T-12 from Evonik.

Examples of trimerization catalysts include tris(dialkylaminoalkyl)-s-hexahydrotriazines, such as 1,3,5-tris(N,N-dimethylaminopropyl)-s-hexahydrotriazine; [2,4,6-Tris (dimethylaminomethyl) phenol]; potassium acetate, potassium octoate;, tetraalkylammonium hydroxides such as tetramethylammonium hydroxide; alkali metal hydroxides such as sodium hydroxide; alkali metal alkoxides such as sodium methoxide and potassium isopropoxide; and alkali metal salts of long-chain fatty acids having 10 to 20 carbon atoms and, combinations thereof. Some commercially available trimerization catalysts include DABCO TMR, DABCO TMR-2, and DABCO TMR-30 from Evonik.

The catalyst can be from 0.5 to 7 parts of the formulated polyol composition based upon 100 parts of the formulated polyol composition. All individual values and subranges from 0.5 to 7 parts are included; for example, the catalyst can be from a lower limit of 0.5, 1, or 2 to an upper limit of 7, 6.5, or 6 parts of the formulated polyol composition based upon 100 parts of the formulated polyol composition.

One or more embodiments of the present disclosure provide that the formulated polyol compositions can include one or more additional components. Different additional components and/or different amounts of the additional components may be utilized for various applications. Examples of additional components include pigments, colorants, antioxidants, bioretardant agents, flame retardants, and combinations thereof, among others. Various amounts of the additional component may be utilized for different applications.

The present invention provides foam formulations including the formulated polyol compositions disclosed herein and an isocyanate according to the claims. The isocyanate may be a polyisocyanate. As used herein, "polyisocyanate" refers to a molecule having an average of greater than 1.0 isocyanate groups per molecule, e.g. an average functionality of greater than 1.0.

The isocyanate can be an aliphatic polyisocyanate, a cycloaliphatic polyisocyanate, an araliphatic polyisocyanate, an aromatic polyisocyanate, or combinations thereof, for example. Examples of isocyanates include, but are not limited to, polymethylene polyphenylisocyanate, toluene 2,4-/2,6-diisocyanate (TDI), methylenediphenyl diisocyanate (MDI), polymeric MDI, triisocyanatononane (TIN), naphthyl diisocyanate (NDI), 4,4'-diisocyanatodicyclohexylmethane, 3-isocyanatomethyl-3,3,5-trimethylcyclohexyl isocyanate (isophorone diisocyanateIIPDI), tetramethylene diisocyanate, hexamethylene diisocyanate (HDI), 2-methylpentamethylene diisocyanate, 2,2,4-trimethylhexamethylene diisocyanate (THDI), dodecamethylene diisocyanate, 1,4-diisocyanatocyclohexane, 4,4'-diisocyanato-3,3'-dimethyldicyclohexylmethane, 4,4'-diisocyanato-2,2-dicyclohexylpropane, 3-isocyanatomethyl-1-methyl-1-isocyanatocyclohexane (MCI), 1,3 -diisooctylcyanato -4 - methylcyclohexane, 1,3 -diisocyanato-2-methylcyclohexane, and combinations thereof, among others. As well as the isocyanates mentioned above, partially modified polyisocyanates including uretdione, isocyanurate, carbodiimide, uretonimine, allophanate or biuret structure, and combinations thereof, among others, may be utilized.

The isocyanate can be polymeric. As used herein "polymeric", in describing the isocyanate, refers to higher molecular weight homologues and/or isomers. For instance, polymeric methylene diphenyl isocyanate refers to a higher molecular weight homologue and/or an isomer of methylene diphenyl isocyanate.

As mentioned, the isocyanate can have an average functionality of greater than 1.0 isocyanate groups per molecule. For instance, the isocyanate can have an average functionality from 1.5 to 8.0. All individual values and subranges from 1.5 to 8.0 are included; for example, the isocyanate can have an average functionality from a lower limit of 1.5, 1.7, 2.0, 2.3, 2.5, 2.7, or 3.0 to an upper limit of 8.0, 7.5, 7.0, 6.7, 6.5, 6.3, 6.0, 5.7 or 5.5.

The isocyanate can have an isocyanate equivalent weight 80 g/eq to 500 g/eq. All individual values and subranges from 80 to 500 g/eq are included; for example, the isocyanate can have an isocyanate equivalent weight from a lower limit of 80, 82, 84, 90, or 100 to an upper limit of 500, 450, 400, 375, or 350 g/eq.

The isocyanate may be prepared by a known process. For instance, the polyisocyanate can be prepared by phosgenation of corresponding polyamines with formation of polycarbamoyl chlorides and thermolysis thereof to provide the polyisocyanate and hydrogen chloride, or by a phosgene-free process, such as by reacting the corresponding polyamines with urea and alcohol to give polycarbamates, and thermolysis thereof to give the polyisocyanate and alcohol, for example.

The isocyanate may be obtained commercially. Examples of commercial isocyanates include, but are not limited to, polyisocyanates under the trade names VORANATE^{™}, VORACOR^{™}, such as VORACOR CL 100 or VORACOR CE 101, and PAPI^{™} such as PAPI 27, available from The Dow Chemical Company, among other commercial isocyanates.

The isocyanate is from 90 to 130 parts of the foam formulation where the formulated polyol composition is 100 parts of the foam formulation. All individual values and subranges from 90 to 130 parts are included; for example, the isocyanate can be from a lower limit of 90, 95, or 100 to an upper limit of 130, 125, or 120 parts of the foam formulation where the formulated polyol composition is 100 parts of the foam formulation.

The isocyanate can be utilized such that the foam formulation has an isocyanate index in a range from 90 to 130. Isocyanate index can be determined as a quotient, multiplied by one hundred, of an actual amount of isocyanate utilized and a theoretical amount of isocyanate for curing. All individual values and subranges from 90 to 130 are included; for example, the foam formulation can have an isocyanate index from a lower limit of 90, 100, or 105 to an upper limit of 130, 125, or 120.

The foam formulations disclosed herein can be cured to form a foam product. For instance, the foam formulation may be cured to form a wood substitute material. The foam products can be prepared, e.g., cured, using known methods and conditions, which may vary for different applications.

The foam formulations and foam products disclosed herein have a combination of properties that are advantageous for a number of applications.

The foam formulation has a cream time from 20 to 35 seconds. Cream time can be defined as the time between the start of material mixing and the point at which fine bubbles begin to appear, a color change occurs, and/or the foam begins to rise. Cream time can be determined according to ASTM D7487. Cream time can be determined by visual inspection. Having a cream time from 20 to 35 seconds can be desirable because such cream times can satisfy the processing parameters of a number of foaming process applications and/or associated equipment, such as pour in place applications for instance.

The foam formulation has a gel time from 50 to 70 seconds. Gel time can be defined as the time at which "strings" of tacky material can be pulled away from the surface of the foam formulation when the surface is contacted with the edge of a tongue depressor or similar instrument. Gel time can be determined according to ASTM D7487. Having a gel time from 50 to 70 seconds can be desirable because such gel times can satisfy the processing parameters of a number of foaming process applications and/or associated equipment, such as pour in place applications for instance.

The foam product has a molded density from 225 to 300 kg/m³. Molded density can be determined according to ASTM D-3574. Having a molded density from 225 to 300 kg/m³can be desirable because such molded densities can satisfy the processing parameters of a number of foaming process applications and/or associated equipment, such as pour in place applications for instance.

The foam product has a Shore D hardness from 21 to 35. Shore D hardness can be determined according to ASTM D-2240. Having a Shore D hardness from 21 to 35 can be desirable to help maintain the dimensional stability and/or the size of the foam product.

The foam product has a passing skin aspect. Passing or failing skin aspect can be determined by visual inspection, where an observed homogenous skin surface has a passing skin aspect and an observed non-homogenous skin surface has a failing skin aspect. Having a passing skin aspect can be desirable for aesthetic and/or functional characteristics of the foam product.

### EXAMPLES

In the Examples, various terms and designations for materials are used including, for instance, the following:
VORANOL^{™} 466 (sucrose propoxylated polyol; average hydroxyl functionality 4.36; average hydroxyl number 392.5 mg KOH/g; number average molecular weight 600 g/mol; obtained from The Dow Chemical Company);
VORANOL^{™} 450 N (propoxylated homopolymer triol; glycerine initiated; average hydroxyl functionality 3; average hydroxyl number 374 mg KOH/g; number average molecular weight 450 g/mol; obtained from The Dow Chemical Company);
VORANOL^{™} RA 640 (amine-initiated polyether alcohol; ethylenediamine initiated propoxylated alcohol; average hydroxyl functionality 2; average hydroxyl number 640 mg KOH/g; number average molecular weight 175 g/mol; obtained from The Dow Chemical Company);
DOWANOL^{™} DPM (physical blowing agent; dipropylene glycol methyl ether; obtained from The Dow Chemical Company);
DC-5374 (surfactant; obtained from The Dow Chemical Company);
DABCO 33-LV (gel catalyst; obtained from Evonik);
N,N-dimethylethanolamine (blowing catalyst; obtained from Evonik);
PAPI^{™} 27 (isocyanate; polymethylene polyphenylisocyanate that contains MDI; obtained from the Dow Chemical Company).

Example 1, a formulated polyol composition, was prepared as follows. For Example 1, the items listed in Table 1 were combined in a container by mixing. The amounts shown in Table 1 are parts based upon a total of 100 parts of the formulated polyol composition.

Comparative Examples A-U were prepared as Example 1, with the changes that the components/amounts indicated in Table 1 were respectively utilized.

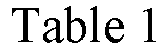

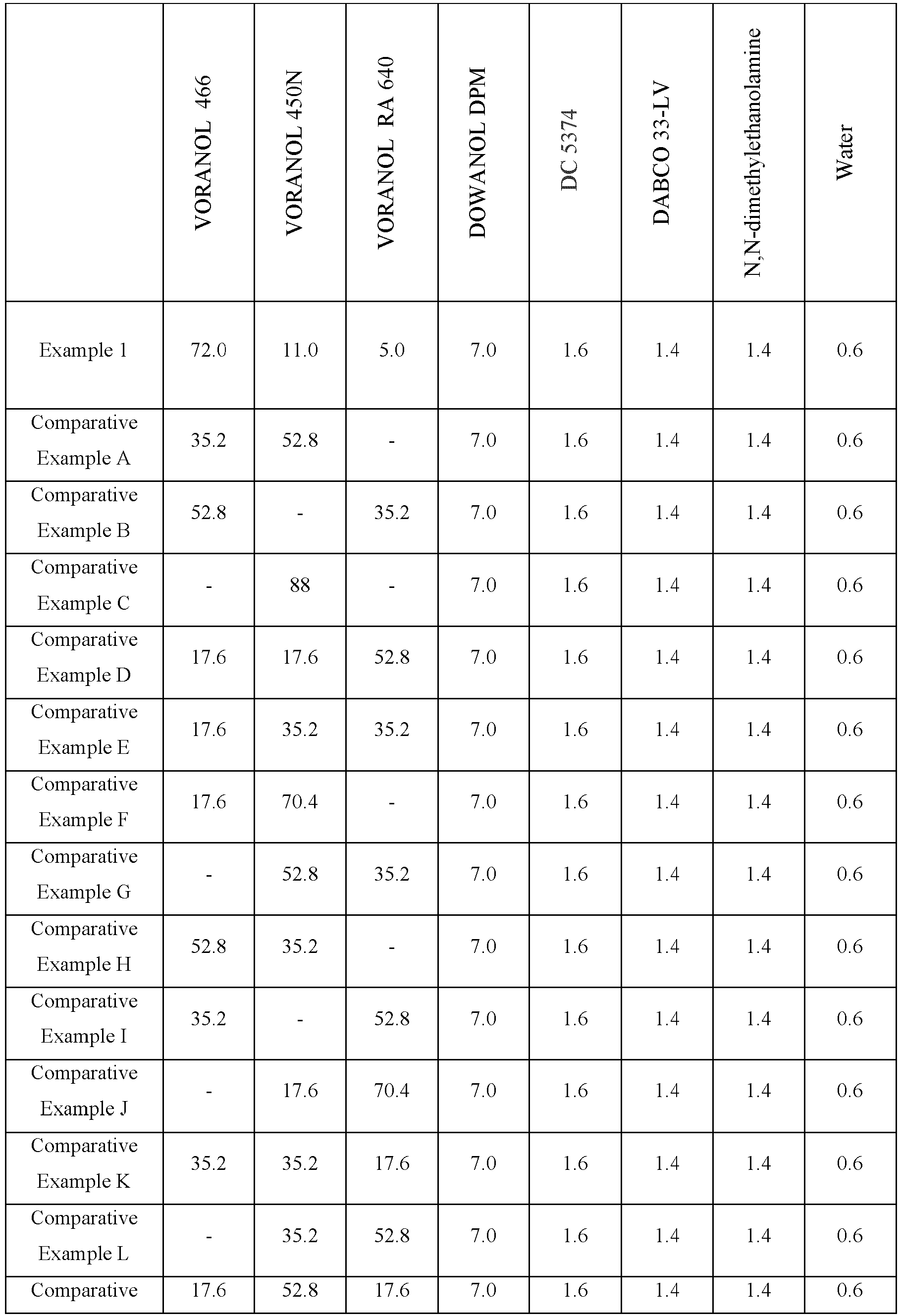

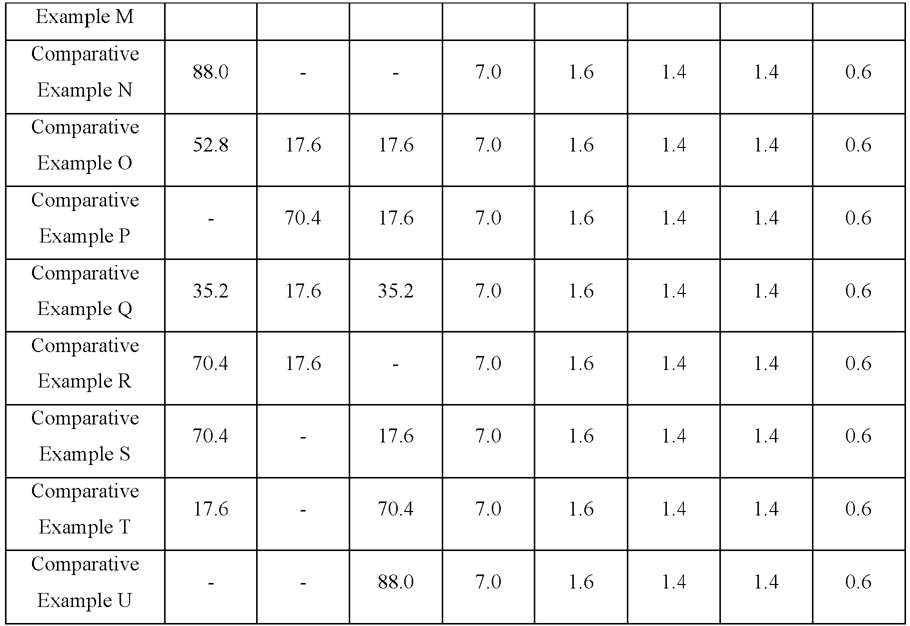

Examples 2, a foam formulation, was formed by combining PAPI27 (110 parts) and Example 1 (100 parts) in a container by mixing for 10 seconds with a laboratory mixer at 3000 rpm, and thereafter cured for 20 minutes at 25 °C to form a foam product.

Comparative Examples AA-UU were prepared as Example 2, with the changes that Comparative Examples A-U were utilized rather than Example 1.

A number of properties were determined for the foam formulations and foam products formed therefrom. Cream time was determined by ASTM D7487. Cream time was determined by visual inspection as the time between the start of material mixing and the point at which fine bubbles began to appear, a color change occurred, and/or the foam began to rise. Gel time was determined by ASTM D7487. Gel time was determined by visual inspection as the time at which "strings" of tacky material were pulled away from the surface of the foam formulation when the surface was contacted with the edge of a tongue depressor. Molded density was determined according to ASTM D-3574. Shore D hardness was determined according to ASTM D-2240. Skin aspect was determined by determined by visual inspection, where an observed homogenous skin surface has a passing skin aspect and an observed non-homogenous skin surface has a failing skin aspect. The results are reported in Table 2.

**Table 2**

| | Cream time (seconds) | Gel time (seconds) | Molded density (kg/m³) | Shore D Hardness | Skin aspect |
|---|---|---|---|---|---|
| Example 2 | 26 | 51 | 257 | 25 | Pass |
| Comparative Example AA | 24 | 60 | 200 | 13 | Fail |
| Comparative Example BB | 20 | 33 | 226 | 22 | Pass |
| Comparative Example CC | 15 | 32 | 196 | 8 | Fail |
| Comparative Example DD | 11 | 25 | 174 | 16 | Fail |
| Comparative Example EE | 13 | 29 | 189 | 18 | Fail |
| Comparative Example FF | 20 | 54 | 185 | 12 | Fail |
| Comparative Example GG24 | 12 | 29 | 192 | 16 | Pass |
| Comparative Example HH | 21 | 52 | 180 | 11 | Fail |
| Comparative Example II | 12 | 24 | 200 | 20 | Pass |
| Comparative Example JJ | 10 | 20 | 202 | 24 | Pass |
| Comparative Example KK | 18 | 37 | 178 | 13 | Fail |
| Comparative Example LL | 11 | 23 | 201 | 20 | Pass |
| Comparative Example MM | 19 | 38 | 218 | 17 | Fail |
| Comparative Example NN | 23 | 56 | 213 | 20 | Pass |
| Comparative Example OO | 19 | 38 | 179 | 14 | Fail |
| Comparative Example PP | 15 | 38 | 195 | 16 | Fail |
| Comparative Example QQ | 17 | 28 | 204 | 22 | Pass |
| Comparative Example RR | 26 | 58 | 180 | 13 | Fail |
| Comparative Example SS | 18 | 41 | 180 | 16 | Pass |
| Comparative Example TT | 10 | 20 | 179 | 22 | Pass |
| Comparative Example UU | 8 | 17 | 165 | 20 | Fail |

The data of Table 2 illustrate that Example 2 provided the advantageous properties discussed herein, i.e. Example 2 provided: a cream time from 20 to 35 seconds; a gel time from 50 to 70 seconds; a molded density from 225 to 300 kg/m³; a Shore D hardness from 21 to 35; and a passing skin aspect.

In contrast to Example 2, the data of Table 2 illustrate that none of Comparative Examples AA-UU provided a cream time from 20 to 35 seconds; a gel time from 50 to 70 seconds; a molded density from 225 to 300 kg/m³; a Shore D hardness from 21 to 35; and a passing skin aspect.

## Claims

1. A formulated polyol composition comprising:
a sucrose propoxylated polyol having an average hydroxyl functionality from 3.0 to 6.0, an average hydroxyl number from 360 to 460 mg KOH/g, and a number average molecular weight from 400 to 800 g/mol;
a propoxylated homopolymer triol having an average hydroxyl functionality from 2.6 to 3.4, an average hydroxyl number from 300 to 500 mg KOH/g, and a number average molecular weight from 250 to 650 g/mol;
an amine-initiated polyether alcohol having an average hydroxyl functionality from 1.0 to 3.5, an average hydroxyl number from 550 to 750 mg KOH/g, and a number average molecular weight from 125 to 250 g/mol;
a blowing agent;
a surfactant; and
a catalyst selected from a blowing catalyst, a gel catalyst, and combinations thereof;
wherein the sucrose propoxylated polyol is from 60 to 85 parts of the formulated polyol composition based upon 100 parts of the formulated polyol composition;
wherein the propoxylated homopolymer triol is from 9 to 18 parts of the formulated polyol composition based upon 100 parts of the formulated polyol composition; and
wherein the amine-initiated polyether alcohol is from 3 to 12 parts of the formulated polyol composition based upon 100 parts of the formulated polyol composition.

2. The formulated polyol composition of claim 1, wherein the blowing agent is selected from a physical blowing agent, a chemical blowing agent, and combinations thereof.

3. The formulated polyol composition of any one of claims 1-2, wherein the blowing agent is from 4 to 10 parts of the formulated polyol composition based upon 100 parts of the formulated polyol composition.

4. The formulated polyol composition of any one of claims 1-3, wherein the surfactant is from is from 0.5 to 5.0 parts of the formulated polyol composition based upon 100 parts of the formulated polyol composition.

5. The formulated polyol composition of any one of claims 1-4, wherein the catalyst is from 0.5 to 7 parts of the formulated polyol composition based upon 100 parts of the formulated polyol composition.

6. A foam formulation comprising:
the formulated polyol composition one of any one of claims 1-5; and
an isocyanate, wherein the isocyanate is from 90 to 130 parts of the foam formulation where the formulated polyol composition is 100 parts of the foam formulation.

7. A foam product formed by curing the foam formulation of claim 6.

## Patentansprüche

1. Formulierte Polyolzusammensetzung, umfassend:
ein Saccharose-propoxyliertes Polyol, das eine durchschnittliche Hydroxylfunktionalität von 3,0 bis 6,0, eine durchschnittliche Hydroxylzahl von 360 bis 460 mg KOH/g und ein zahlenmittleres Molekulargewicht von 400 bis 800 g/mol aufweist;
ein propoxyliertes Homopolymertriol, das eine durchschnittliche Hydroxylfunktionalität von 2,6 bis 3,4, eine durchschnittliche Hydroxylzahl von 300 bis 500 mg KOH/g und ein zahlenmittleres Molekulargewicht von 250 bis 650 g/mol aufweist;
einen amininitiierten Polyetheralkohol, der eine durchschnittliche Hydroxylfunktionalität von 1,0 bis 3,5, eine durchschnittliche Hydroxylzahl von 550 bis 750 mg KOH/g und ein zahlenmittleres Molekulargewicht von 125 bis 250 g/mol aufweist;
ein Treibmittel;
ein Tensid; und
einen Katalysator, der aus einem Treibkatalysator, einem Gelkatalysator und Kombinationen davon ausgewählt ist;
wobei das Saccharose-propoxylierte Polyol von 60 bis 85 Teile der formulierten Polyolzusammensetzung, basierend auf 100 Teile der formulierten Polyolzusammensetzung, beträgt;
wobei das propoxylierte Homopolymertriol von 9 bis 18 Teile der formulierten Polyolzusammensetzung, basierend auf 100 Teile der formulierten Polyolzusammensetzung, beträgt; und
wobei der amininitiierte Polyetheralkohol von 3 bis 12 Teile der formulierten Polyolzusammensetzung, basierend auf 100 Teile der formulierten Polyolzusammensetzung, beträgt.

2. Formulierte Polyolzusammensetzung nach Anspruch 1, wobei das Treibmittel aus einem physikalischen Treibmittel, einem chemischen Treibmittel und Kombinationen davon ausgewählt ist.

3. Formulierte Polyolzusammensetzung nach einem der Ansprüche 1 bis 2, wobei das Treibmittel von 4 bis 10 Teile der formulierten Polyolzusammensetzung, basierend auf 100 Teile der formulierten Polyolzusammensetzung, beträgt.

4. Formulierte Polyolzusammensetzung nach einem der Ansprüche 1 bis 3, wobei das Tensid von 0,5 bis 5,0 Teile der formulierten Polyolzusammensetzung, basierend auf 100 Teile der formulierten Polyolzusammensetzung, beträgt.

5. Formulierte Polyolzusammensetzung nach einem der Ansprüche 1 bis 4, wobei der Katalysator von 0,5 bis 7 Teile der formulierten Polyolzusammensetzung, basierend auf 100 Teile der formulierten Polyolzusammensetzung, beträgt.

6. Schaumstoffformulierung, umfassend:
die formulierte Polyolzusammensetzung nach einem der Ansprüche 1 bis 5; und
ein Isocyanat, wobei das Isocyanat von 90 bis 130 Teile der Schaumstoffformulierung beträgt, wobei die formulierte Polyolzusammensetzung 100 Teile der Schaumformulierung beträgt.

7. Schaumstoffprodukt, das durch ein Aushärten der Schaumstoffformulierung nach Anspruch 6 gebildet ist.

## Revendications

1. Composition de polyol formulée comprenant :
un polyol propoxylé de saccharose ayant une fonctionnalité hydroxyle moyenne allant de 3,0 à 6,0, un indice d'hydroxyle moyen allant de 360 à 460 mg KOH/g, et une masse moléculaire moyenne en nombre allant de 400 à 800 g/mol ;
un triol homopolymère propoxylé ayant une fonctionnalité hydroxyle moyenne allant de 2,6 à 3,4, un indice d'hydroxyle moyen allant de 300 à 500 mg KOH/g, et une masse moléculaire moyenne en nombre allant de 250 à 650 g/mol ;
un alcool de polyéther initié par amine ayant une fonctionnalité hydroxyle moyenne allant de 1,0 à 3,5, un indice d'hydroxyle moyen allant de 550 à 750 mg KOH/g, et une masse moléculaire moyenne en nombre allant de 125 à 250 g/mol ;
un agent d'expansion ;
un agent tensioactif ; et
un catalyseur choisi parmi un catalyseur d'expansion, un catalyseur de gel, et des combinaisons de ceux-ci ;
dans laquelle le polyol propoxylé de saccharose représente de 60 à 85 parties de la composition de polyol formulée sur la base de 100 parties de la composition de polyol formulée ;
dans laquelle le triol homopolymère propoxylé représente de 9 à 18 parties de la composition de polyol formulée sur la base de 100 parties de la composition de polyol formulée ; et
dans laquelle l'alcool de polyéther initié par amine représente de 3 à 12 parties de la composition de polyol formulée sur la base de 100 parties de la composition de polyol formulée.

2. Composition de polyol formulée selon la revendication 1, dans laquelle l'agent d'expansion est choisi parmi un agent d'expansion physique, un agent d'expansion chimique, et des combinaisons de ceux-ci.

3. Composition de polyol formulée selon l'une quelconque des revendications 1 à 2, dans laquelle l'agent d'expansion représente de 4 à 10 parties de la composition de polyol formulée sur la base de 100 parties de la composition de polyol formulée.

4. Composition de polyol formulée selon l'une quelconque des revendications 1 à 3, dans laquelle l'agent tensioactif représente de 0,5 à 5,0 parties de la composition de polyol formulée sur la base de 100 parties de la composition de polyol formulée.

5. Composition de polyol formulée selon l'une quelconque des revendications 1 à 4, dans laquelle le catalyseur représente de 0,5 à 7 parties de la composition de polyol formulée sur la base de 100 parties de la composition de polyol formulée.

6. Formulation de mousse comprenant :
la composition de polyol formulée selon l'une quelconque des revendications 1 à 5 ; et
un isocyanate, dans laquelle l'isocyanate représente de 90 à 130 parties de la formulation de mousse, où la composition de polyol formulée représente 100 parties de la formulation de mousse.

7. Produit de mousse formé par durcissement de la formulation de mousse selon la revendication 6.
